# EUROPÄISCHE PATENTSCHRIFT

(11) **EP 1 196 684 B1**
(45) Veröffentlichungstag und Bekanntmachung des Hinweises auf die Patenterteilung: **22.10.2003**
(21) Anmeldenummer: 00943751.8
(22) Anmeldetag: 31.05.2000
(51) Int. Cl.: F02D 41/02, F01N 3/08

(54) **VERFAHREN ZUR STEUERUNG EINER REGENERATION EINES NOx-SPEICHERKATALYSATORS**
METHOD FOR CONTROLLING NOx STORAGE CATALYST REGENERATION
PROCEDE DE COMMANDE DE LA REGENERATION D'UN CATALYSEUR ACCUMULATEUR DE NOx

(30) Priorität: 25.06.1999 DE 19929293
(43) Veröffentlichungstag der Anmeldung: 17.04.2002
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Schneider, Henry, Dipl.-Ing.
(86) Internationale Anmeldenummer: EP0004979
(87) Internationale Veröffentlichungsnummer: WO01000977

(56) Entgegenhaltungen:
- EP-A- 0 858 837
- EP-A- 0 927 818
- M. SIDERIS: "Methods for monitoring and diagnosing the efficiency of catalytic converters" 1998 , ELSEVIER SCIENCE B.V. , AMSTERDAM XP002149278 115 ISBN: 0-444-82952-0 Studies in Surface Science and Catalysis Vol. 115 Seite 239 -Seite 252; Abbildung 108

## Beschreibung

Die Erfindung betrifft ein Verfahren zur Steuerung einer Regeneration von wenigstens einem in einem Abgaskanal einer Verbrennungskraftmaschine angeordneten NOₓ-Speicherkatalysator mit den im Oberbegriff des Anspruchs 1 genannten Merkmalen.

Es ist bekannt, zur Reinigung eines Abgases der Verbrennungskraftmaschine in dem Abgaskanal wenigstens einen Katalysator anzuordnen. Während eines Verbrennungsvorgangs eines Kraftstoff-Luft-Gemisches entstehen in unterschiedlichen Anteilen gasförmige Schadstoffe. Diese lassen sich anhand ihres Oxidationsverhaltens in Reduktionsmittel, wie Kohlenmonoxid CO, unverbrannte Kohlenwasserstoffe HC oder Wasserstoff H₂, einerseits und in Oxidationsmittel, wie Stickoxide NOₓ oder Schwefeloxide SOₓ, einteilen. Die Reduktionsmittel werden dabei an dem Katalysator mit Sauerstoff in weniger umweltrelevante Produkte umgesetzt, während die Oxidationsmittel an dem Katalysator mit Hilfe der Reduktionsmittel reduziert werden.

Befindet sich die Verbrennungskraftmaschine in einem Arbeitsmodus mit λ < 1 (fette Atmosphäre), so überwiegt ein Kraftstoffanteil einen Sauerstoffanteil in dem Luft-Kraftstoff-Gemisch. Infolgedessen treten in dem Abgas vermehrt Reduktionsmittel auf. Häufig ist jedoch die Sauerstoffkonzentration im Bereich des Katalysators noch ausreichend, um - sofern erwünscht - eine zumindest weitestgehende Umsetzung der Reduktionsmittel an dem Katalysator zu ermöglichen. In einem solchen Arbeitsmodus ist die Konzentration der Reduktionsmittel auch groß genug, um eine nahezu vollständige Umsetzung der Oxidationsmittel zu gewähren.

Es hat sich gezeigt, daß zur Optimierung eines Kraftstoffverbrauchs der Verbrennungskraftmaschine ein Arbeitsmodus mit λ > 1 (magere Atmosphäre) bevorzugt ist. Unter magerer Atmosphäre ist allerdings der Anteil der Reduktionsmittel an dem Abgas herabgesetzt. Daneben kann auch ein Gleichgewicht bei einer Bildung der Oxidationsmittel derart verschoben werden, daß der Anteil von Oxidationsmitteln im Abgas steigt. Um dennoch eine Emission der Oxidationsmittel möglichst gering zu halten, ist es bekannt, dem Katalysator einen NOₓ-Speicher zuzuordnen. Der NOₓ-Speicher und der Katalysator können zu einem NOₓ-Speicherkatalysator zusammengefaßt werden. Befindet sich die Verbrennungskraftmaschine in magerer Atmosphäre, so wird NOₓ als Nitrat absorbiert und zwar so lange, bis entweder eine NOₓ-Desorptionstemperatur oder eine NOₓ-Speicherkapazität erreicht ist.

Es ist daher bekannt, den NOₓ-Speicherkatalysator in regelmäßigen Abständen zu regenerieren. Bei einer NOₓ-Regeneration wird die Verbrennungskraftmaschine kurzfristig auf einen Arbeitsmodus mit λ ≤ 1 eingestellt. Unter diesen Bedingungen findet eine NOₓ-Desorption statt, und das NOₓ wird an dem Speicherkatalysator mit den Reduktionsmitteln umgesetzt.

Neben NOₓ wird auch das SOₓ als Sulfat von dem NOₓ-Speicherkatalysator absorbiert. Aufgrund einer höheren thermodynamischen Stabilität des Sulfats gegenüber dem Nitrat liegt eine SOₓ-Desorptionstemperatur allerdings deutlich über der NOₓ-Desorptionstemperatur. Daher muß zur SOₓ-Regeneration häufig noch zusätzlich eine Erhöhung einer Katalysatortemperatur erfolgen. Auch die SOₓ-Regeneration sollte in regelmäßigen Abständen durchgeführt werden, da ansonsten einerseits eine NOₓ-Speicherfähigkeit reduziert wird und andererseits eine Sulfatkornbildung zu Verspannungen innerhalb des NOₓ-Speicherkatalysators führen kann. Derartige Verspannungen können zu einer irreversiblen Schädigung des NOₓ-Speicherkatalysators führen, beispielsweise durch physischen Masseverlust. Daneben wird - unter anderem durch Sulfitbildung - eine katalytische Aktivität des NOₓ-Speicherkatalysators herabgesetzt.

Es ist bekannt, eine Einleitung der Regeneration (NOₓ- und SOₓ-Regeneration) abhängig zu machen von einem Beladungszustand des NOₓ-Speicherkatalysators mit NOₓ und/oder SOₓ. Dazu kann beispielsweise der Anteil eines gasförmigen Schadstoffes, insbesondere NOₓ, in dem Abgas stromab des NOₓ-Speicherkatalysators erfaßt werden und mit einem Sollanteil dieses gasförmigen Schadstoffes verglichen werden. Aus dem Vergleich kann der Beladungszustand berechnet werden und gegebenenfalls die Regeneration initiiert werden.

Aus der EP 0 858 837 A ist ein Verfahren zur Regeneration, insbesondere zur Entschwefelung eines Speicherkatalysators bekannt, bei dem der Beladungszustand des Katalysators mit Schwefel in Abhängigkeit von dem in der Vergangenheit verbrauchten Kraftstoff, einem Schwefelgehalt des Kraftstoffes sowie von der Motorlast, der Drehzahl, dem λ-Wert und/oder von der Katalysatortemperatur während des Kraftstoffverbrauchs in der Vergangenheit bestimmt wird. Bei Überschreitung einer kritischen Schwelle für den Schwefel-Beladungszustand wird die Entschwefelung durch Einstellen einer Katalysatortemperatur von über 600 °C und einem λ < 1 als Regenerationsparameter eingeleitet.

Es ist bekannt, zur Steuerung der Regeneration auch zusätzliche Gassensoren und Temperatursensoren in dem Abgaskanal anzuordnen, so daß auf diese Weise eine Abgaszusammensetzung und eine Temperatur zumindest bereichsweise in dem Abgaskanal erfaßt werden kann. Nachteilig bei allen bekannten Verfahren zur Steuerung der Regeneration des NOₓ-Speicherkatalysators ist jedoch, daß von einem homogenen Temperaturverlauf innerhalb des NOₓ-Speicherkatalysators und einem homogenen Beladungszustand mit NOₓ und SOₓ ausgegangen wird (Ein-Zonen-Speicherkatalysatormodell). In einem dynamischen Betrieb der Verbrennungskraftmaschine kommt es jedoch häufig zu Teilregenerationen in Verbindung mit einem inhomogenen Temperaturverlauf über den NOₓ-Speicherkatalysator. Zudem werden oberflächennahe Zonen des NOₓ-Speicherkatalysators mit einem geringeren Reduktionsmittelaufwand regeneriert, während eine innere Schicht einen zunehmend höheren Reduktionsmittelbedarf besitzt. Überdies ist eine Regenerationsgeschwindigkeit von der Temperatur und von einem lokalen Lambdawert abhängig. Daher können die nach dem herkömmlichen Verfahren ermittelten Regenerationsparameter einerseits zu einer Unterdosierung des Reduktionsmittels führen, bei der der NOₓ-Speicherkatalysator nur teilweise NOₓ beziehungsweise SOₓ regeneriert wird und andererseits kann ein Überschuß des Reduktionsmittels zu einer unerwünschten Reduktionsmittelemission und zu einem unnötigem Kraftstoffmehrverbrauch führen.
Aufgabe des erfindungsgemäßen Verfahrens ist es, die Regeneration des NOₓ-Speicherkatalysators wesentlich genauer auf einen tatsächlichen Katalysatorzustand in ausgewählten Bereichen des NOₓ-Speicherkatalysators abzustimmen. Insbesondere soll die Regenerationsgeschwindigkeit, der Beladungszustand und der Temperaturverlauf innerhalb des NOₓ-Speicherkatalysators bei einer Festlegung der Regenerationsparameter berücksichtigt werden.

Erfindungsgemäß wird diese Aufgabe durch ein Verfahren zur Steuerung einer Regeneration von wenigstens einem in einem Abgaskanal einer Verbrennungskraftmaschine angeordneten NOₓ-Speicherkatalysator mit den Merkmalen des Anspruchs 1 gelöst. Dadurch, daß
(a) ein Washcoat des NOₓ-Speicherkatalysators entsprechend einer vorgebbaren Matrix in eine Anzahl von Katalysatorzellen aufgeteilt wird,
(b) der Katalysatorzustand für jede Katalysatorzelle ermittelt wird (Zustandsparameter),
(c) jeder einzelnen Katalysatorzelle ein vorgebbarer Wichtungsfaktor zugeordnet wird,
(d) ein Zellparameter für die Regeneration mittels des jeweiligen Zustandsparameters und Wichtungsfaktors für jede einzelne Katalysatorzelle berechnet wird und
(e) eine Summe der Zellparameter jeder einzelnen Katalysatorzelle zur Festlegung der Regenerationsparameter dient,
können lokale Gegebenheiten (Inhomogenitäten) des NOₓ-Speicherkatalysators berücksichtigt werden.

In einer bevorzugten Ausgestaltung des Verfahrens werden die Zustandsparameter und/oder die Wichtungsfaktoren während der Regeneration kontinuierlich oder nach Ablauf einer durch eine vorgebbare Funktion festgelegten Zeitspanne emeut erfaßt oder berechnet. Somit ist es möglich, die Einstellung der Regenerationsparameter unmittelbar dem tatsächlichen Katalysatorzustand anzupassen, so daß letztendlich während der Regeneration für jede Katalysatorzelle nahezu optimale Regenerationsparameter festlegbar sind. Insgesamt ist damit also eine nahezu vollständige Regeneration aller Bereiche des NOₓ-Speicherkatalysators möglich, wobei zusätzlich eine Regenerationsdauer herabgesetzt werden kann.

Weiterhin ist bevorzugt, die Matrix zur Aufteilung des NOₓ-Speicherkatalysators in die Katalysatorzellen anhand eines NOₓ-Speicherkatalysatormodells festzulegen. Das Speicherkatalysatormodell kann beispielsweise eine räumliche Erstreckung des NOₓ-Speicherkatalysators, den Temperaturverlauf oder den Verlauf der Regenerationsgeschwindigkeiten berücksichtigen. Weiterhin ist denkbar, einen Verlauf der NOₓ-Speicherfähigkeit, einen Verlauf des NOₓ-, SOₓ- und O₂-Beladungszustandes über den NOₓ-Speicherkatalysator zu berücksichtigen. Selbstverständlich kann die Matrix auch durch eine Kombination der genannten Parameter berechnet werden.

Weiterhin hat es sich als vorteilhaft erwiesen, den Katalysatorzustand anhand des Verlaufs des NOₓ-, SOₓ- oder O₂-Beladungszustandes und/oder des Verlaufs der absorbierten Sauerstoffmasse zu bestimmen. Denkbar ist auch, den Temperaturverlauf innerhalb des NOₓ-Speicherkatalysators zu erfassen. Auf diese Weise läßt sich ein optimaler Regenerationsparameter für jede einzelne Katalysatorzelle bestimmen.

Ferner ist vorteilhaft, den Wichtungsfaktor anhand einer vorgebbaren Funktion für den NOₓ- und SOₓ-Beladungszustand festzulegen. Ebenso ist denkbar, den Wichtungsfaktor anhand eines Kennfelds für den NOₓ- und SOₓ-Beladungszustand und/oder einer räumlichen Lage der einzelnen Katalysatorzelle zu bestimmen. So kann beispielsweise mit fortschreitender Regenerationsdauer der Wichtungsfaktor in den oberflächennahen Zonen des NOₓ-Speicherkatalysators herabgesetzt oder gar auf Null gesetzt werden, so daß die Regenerationsparameter auf die Regeneration der inneren Schichten optimiert werden können.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Anordnung eines NOₓ-Speicherkatalysators in einem Abgaskanal einer Verbrennungskraftmaschine;
- Figur 2: ein Verlauf eines Lambdawertes während einer Regeneration;
- Figur 3: ein Ablaufdiagramm zur Ermittlung von Regenerationsparametem für eine Regeneration und
- Figur 4: eine beispielhafte Aufteilung eines NOₓ-Speicherkatalysators in Katalysatorzellen anhand einer Matrix.

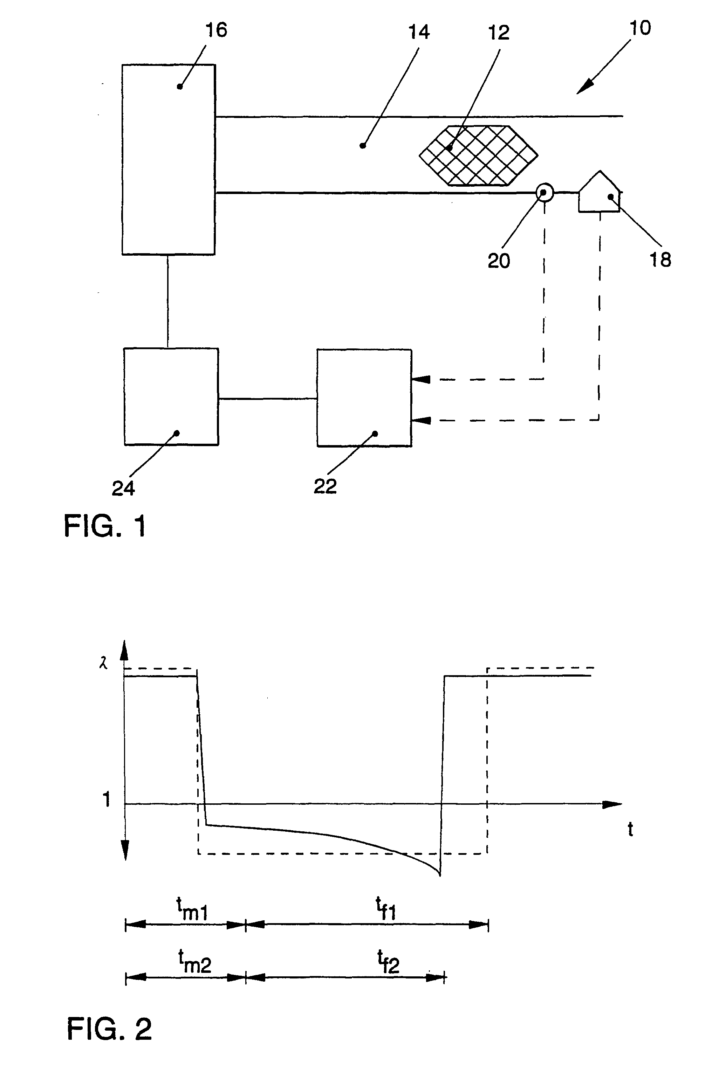

Die Figur 1 zeigt eine schematische Darstellung einer Anordnung 10 mit einem NOₓ-Speicherkatalysator 12 in einem Abgaskanal 14 einer Verbrennungskraftmaschine 16. Selbstverständlich ist die Anordnung 10 lediglich ein stark vereinfachtes Ausführungsbeispiel, und es können ebenso auch zusätzliche NOₓ-Speicherkatalysatoren oder Vorkatalysatoren im Bereich des Abgaskanals 14 angeordnet werden. Derartige Anordnungen sind bekannt und sollen hier nicht näher erläutert werden.

In dem Abgaskanal werden zusätzlich Sensoren angeordnet, die einen Rückschluß auf einen aktuellen Katalysatorzustand erlauben, indem sie beispielsweise einen Gehalt einer Gaskomponente in einem Abgas oder eine Temperatur erfassen. In der Anordnung 10 sind dazu beispielhaft ein Gassensor 18 und ein Temperatursensor 20 dargestellt, die stromab des NOₓ-Speicherkatalysators 12 liegen. Die Sensoren 18, 20 liefern Signale, die innerhalb eines Motorsteuergerätes 22 ausgewertet werden können. Ferner sind der Verbrennungskraftmaschine 16 Mittel 24 zugeordnet, die eine zumindest temporäre Beeinflussung eines Betriebsparameters der Verbrennungskraftmaschine 16 ermöglichen. Auf diese Weise kann eine Abgastemperatur, ein Arbeitsmodus der Verbrennungskraftmaschine 16 und/oder der Anteil der einzelnen Gaskomponenten im Abgas variiert werden. Eine derartige Beeinflussung der Betriebsparameter der Verbrennungskraftmaschine 16 ist bekannt und soll in diesem Zusammenhang nicht näher erläutert werden.

Während eines Verbrennungsvorganges eines Luft-Kraftstoff-Gemisches in der Verbrennungskraftmaschine 16 entstehen in wechselnden Anteilen Reduktionsmittel, wie CO, HC und H₂, und Oxidationsmittel, wie NOₓ und SOₓ. In einem Arbeitsmodus mit λ < 1 (fette Atmosphäre) überwiegt ein Kraftstoffanteil einen Sauerstoffanteil in dem Luft-Kraftstoff-Gemisch. Infolgedessen werden in einem erhöhten Maße Reduktionsmittel gebildet. Wechselt der Arbeitsmodus in einem Bereich mit λ > 1 (magere Atmosphäre), so sinkt der Anteil der Reduktionsmittel am Abgas. Im NOₓ-Speicherkatalysator 12 werden die Reduktionsmittel mit Sauerstoff oxidiert. Damit ist eine Verminderung einer Reduktionsmittelemission in einem ausreichenden Maße immer dann möglich, wenn eine Sauerstoffkonzentration im NOₓ-Speicherkatalysator 12 entsprechend hoch ist.

Die Oxidationsmittel werden dagegen in dem NOₓ-Speicherkatalysator 12 durch die Reduktionsmittel umgesetzt. In einem ausreichenden Maße kann dies nur in einem Arbeitsmodus mit λ ≤ 1 erfolgen. In magerer Atmosphäre wird das NOₓ als Nitrat und das SOₓ als Sulfat absorbiert und zwar so lange, bis eine NOₓ-Desorptionstemperatur oder NOₓ-Speicherkapazität erreicht wird. Vor diesem Zeitpunkt muß demnach zumindest eine NOₓ-Regeneration durchgeführt werden.

Aufgrund einer höheren SOₓ-Desorptionstemperatur findet eine SOₓ-Regeneration im allgemeinen während der NOₓ-Regeneration nicht statt. Insgesamt sind jedoch für eine Regeneration (NOₓ- und SOₓ-Regeneration) ein Arbeitsmodus mit λ ≤ 1 und eine Regenerationstemperatur (in Abhängigkeit von der NOₓ- beziehungsweise SOₓ-Desorptionstemperatur) notwendig, die zusammengefaßt die Regenerationsparameter bilden. Eine Einstellung der Regenerationsparameter kann in bekannter Weise durch die Beeinflussung der Betriebsparameter der Verbrennungskraftmaschine 16 erfolgen. Ebenso ist es bekannt, eine Regenerationsnotwendigkeit des NOₓ-Speicherkatalysators 12 zu bestimmen und soll in diesem Zusammenhang nicht näher erläutert werden.

Ein Verlauf des Lambdawertes während der Regeneration stromauf des NOₓ-Speicherkatalysators 12 ist in der Figur 2 dargestellt. Dabei zeigt eine gestrichelte Linie einen Verlauf des Lambdawertes entsprechend einem herkömmlichen Verfahren und dient lediglich zur Veranschaulichung. Dabei wird zunächst in einer Phase tₘ₁ der NOₓ-Speicherkatalysator 12 mit einem mageren Abgas (λ > 1) beaufschlagt und während der Regeneration dann in einer Phase t_{f1} entsprechend einem vorgebbaren Lambdawert mit einem fetten Abgas beaufschlagt. Demgegenüber ist ein Verlauf des Lambdawertes gemäß dem erfindungsgemäßen Verfahren (durchgezogene Linie) deutlich andersartig.

Am Ende einer mageren Phase tₘ₂ wird zwar ebenso für eine Phase t_{f2} ein fetter Arbeitsmodus der Verbrennungskraftmaschine 16 eingestellt, jedoch ist eine Lage des Lambdawertes über die Phase t_{f2} variabel. So wird zu Beginn der Phase t_{f2} ein Lambdawert knapp unter 1 eingestellt, um optimale Regenerationsparameter für ausgewählte Bereiche des NOₓ-Speicherkatalysators 12 zu gewährleisten. Im Laufe der Phase t_{f2} wird der Lambdawert abgesenkt. Mit sinkendem Lambdawert stellen sich nachfolgend optimale Regenerationsparameter für andere Bereiche des NOₓ-Speicherkatalysators 12 ein. Diese Steuerung der Regeneration wird nachfolgend noch näher erläutert. Festgehalten werden kann hier aber bereits, daß durch diese Steuerung die Phase t_{f2} gegenüber der Phase t_{f1} verkürzt ist und damit eine Regenerationsdauer sinkt. Dementsprechend wird auch ein Kraftstoffverbrauch, der im allgemeinen während der Regeneration erhöht ist, vermindert. Weiterhin ist auf diese Weise eine nahezu optimale Regeneration aller Bereiche des NOₓ-Speicherkatalysators 12 möglich, da jeweils optimale Regenerationsparameter vorliegen. Ein Überschuß oder ein Unterschuß an Reduktionsmitteln, wie er bei bekannten Verfahren auftreten kann, kann somit weitgehend vermieden werden.

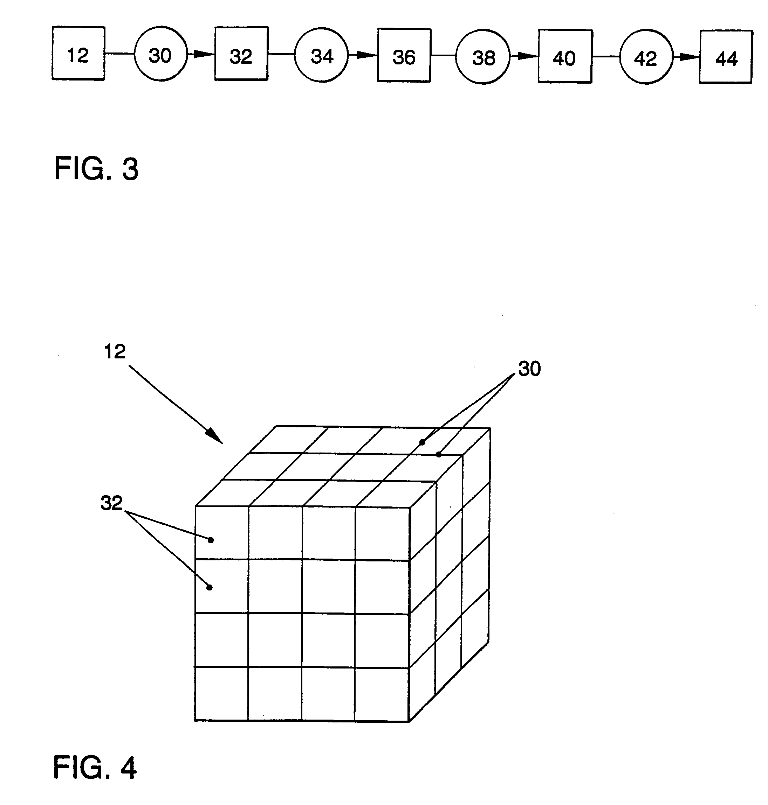

Die Figur 3 zeigt ein Ablaufdiagramm für die Steuerung der Regeneration. In einem ersten Schritt wird der NOₓ-Speicherkatalysator 12 entsprechend einer vorgebbaren Matrix 30 in eine beliebige Anzahl von Katalysatorzellen 32 aufgeteilt. Dieser erste Schritt ist in der Figur 4 zur Verdeutlichung in einem Ausführungsbeispiel dargestellt. Die Matrix zur Aufteilung eines Washcoats des NOₓ-Speicherkatalysators 12 in die Katalysatorzellen 32 kann anhand eines Speicherkatalysatormodells festgelegt werden. Dieses Modell kann beispielsweise eine räumliche Erstreckung des NOₓ-Speicherkatalysator-Washcoats 12, einen Temperaturverlauf oder einen Verlauf einer Regenerationsgeschwindigkeit innerhalb des NOₓ-Speicherkatalysators 12 umfassen. Denkbar ist auch, einen Verlauf einer NOₓ-Speicherfähigkeit und einen Verlauf eines Beladungszustandes für NOₓ, SOₓ oder O₂ innerhalb des NOₓ-Speicherkatalysators 12 zu nutzen. Der Beladungszustand ist dabei ein Maß für eine absorbierte NOₓ-, SOₓoder O₂-Masse einer Katalysatorzelle. Selbstverständlich ist es möglich, eine Kombination der genannten Parameter in eine Berechnung der Matrix 30 einfließen zu lassen.

In einem zweiten Schritt wird der Katalysatorzustand 34 für jede Katalysatorzelle 32 ermittelt und liefert einen Zustandsparameter 36 für jede Katalysatorzelle 32. Der Katalysatorzustand 34 umfaßt dabei den Verlauf des Beladungszustandes von NOₓ, SOₓ oder O₂ oder den Temperaturverlauf innerhalb des NOₓ-Speicherkatalysators 12. Der Katalysatorzustand 34 kann dabei entweder direkt durch geeignete Sensoren, beispielsweise den Sensoren 18, 28, erfaßt werden oder anhand eines Modells berechnet werden.

In einem dritten Schritt erfolgt eine Zuordnung eines Wichtungsfaktors 38 zu jeder Katalysatorzelle 32. Mit Hilfe des Wichtungsfaktors 38 und dem Zustandsparameter 36 kann ein Zellparameter 40 für die Regeneration jeder einzelnen Katalysatorzelle 32 berechnet werden. Der Wichtungsfaktor 38 kann dabei beispielsweise anhand einer vorgebbaren Funktion für den Beladungszustand an NOₓ oder SOₓ festgelegt werden. Denkbar ist auch, den Wichtungsfaktor 38 anhand eines Kennfeldes für den NOₓ-, SOₓ-Beladungszustand und/oder einer räumlichen Lage der Katalysatorzelle 32 festzulegen. Wird beispielsweise der Wichtungsfaktor 38 für eine bestimmte Katalysatorzelle 32 auf Null gesetzt, so wird der Katalysatorzustand 34 dieser bestimmten Katalysatorzelle 32 in einer nachfolgenden Berechnung der Regenerationsparameter nicht mehr berücksichtigt und somit kann eine sehr genaue Anpassung der Regeneration an einen tatsächlichen Katalysatorzustand 34 erfolgen.

Die für jede Katalysatorzelle 32 ermittelten Zellparameter 40 werden in einem nachfolgenden Schritt 42 aufsummiert und liefern letztendlich die Regenerationsparameter 44. Diese dienen dann -wie in der Figur 2 exemplarisch dargestellt ist- zur Festlegung des Verlaufs des Lambdawertes während der Regeneration.

Die Zustandsparameter 36 und/oder die Wichtungsfaktoren 38 können auch während der Regeneration kontinuierlich oder nach Ablauf einer durch eine vorgebbare Funktion festgelegten Zeitspanne erneut berechnet werden. Auf diese Weise kann sehr flexibel auch auf Änderungen des Katalysatorzustands während der Regeneration reagiert werden und infolgedessen kann die Regenerationsdauer wiederum gesenkt werden.

## Patentansprüche

1. Verfahren zur Steuerung einer Regeneration von wenigstens einem in einem Abgaskanal (14) einer Verbrennungskraftmaschine (16) angeordneten NOₓ-Speicherkatalysator (12), wobei zur Regeneration durch eine zumindest temporäre Beeinflussung wenigstens eines Betriebsparameters der Verbrennungskraftmaschine (16) als Regenerationsparameter (44) eine Katalysatortemperatur und ein Arbeitsmodus der Verbrennungskraftmaschine (16) mit λ ≤ 1 eingestellt werden und wobei ein Katalysatorzustand (34) berechnet und/oder durch wenigstens einen Sensor erfaßt wird, **dadurch gekennzeichnet, daß**
(a) ein Washcoat des NOₓ-Speicherkatalysators (12) entsprechend einer vorgebbaren Matrix (30) in Katalysatorzellen (32) aufgeteilt wird,
(b) der Katalysatorzustand (34) für jede Katalysatorzelle (32) und hieraus ein Zustandsparameter (36) für jede Katalysatorzelle (32) ermittelt wird,
(c) jeder einzelnen Katalysatorzelle (32) ein vorgebbarer Wichtungsfaktor (38) zugeordnet wird,
(d) ein Zellparameter (40) für die Regeneration mittels des jeweiligen Zustandsparameters (36) und dem Wichtungsfaktor (38) für jede einzelne Katalysatorzelle (32) berechnet wird und
(e) eine Summe der Zellparameter (40) jeder einzelnen Katalysatorzelle (32) zur Festlegung der Regenerationsparameter (44) dient.

2. Verfahren nach Anspruch 1, **dadurch gekennzeichnet, daß** die Zustandsparameter (36) und/oder die Wichtungsfaktoren (38) während der Regeneration kontinuierlich oder nach Ablauf einer durch eine vorgebbare Funktion festgelegten Zeitspanne emeut berechnet werden.

3. Verfahren nach einem der vorhergehenden Ansprüche, **dadurch gekennzeichnet, daß** die Matrix (30) zur Aufteilung des NOₓ-Speicherkatalysators (12) in die Katalysatorzellen (32) anhand eines Speicherkatalysatorrnodells für eine räumliche Erstreckung, einen Temperaturverlauf, einen Verlauf einer Regenerationsgeschwindigkeit, einen Verlauf einer NOₓ-Speicherfähigkeit, einen Verlauf eines NOₓ-, SOₓ- oder O₂-Beladungszustandes oder einer Kombination derselben festgelegt wird.

4. Verfahren nach einem der vorhergehenden Ansprüche, **dadurch gekennzeichnet, daß** der Katalysatorzustand (34) den Verlauf des NOₓ-, SOₓoder O₂-Beladungszustandes oder den Temperaturverlauf oder eine Kombination derselben umfaßt.

5. Verfahren nach einem der vorhergehenden Ansprüche, **dadurch gekennzeichnet, daß** der Wichtungsfaktor (38) anhand einer vorgebbaren Funktion für den NOₓ- und/oder den SOₓ-Beladungszustand der einzelnen Katalysatorzelle (32) festgelegt wird.

6. Verfahren nach einem der Ansprüche 1 bis 4, **dadurch gekennzeichnet, daß** der Wichtungsfaktor (38) anhand eines Kennfeldes für den NOₓ- und/oder SOₓ-Beladungszustand und/oder einer räumlichen Lage der einzelnen Katalysatorzelle (32) festgelegt wird.

## Claims

1. Method for controlling a regeneration of at least one NOₓ-storage catalyst (12) disposed in the exhaust gas duct (14) of a combustion engine (16), wherein, as regeneration parameters (44), a catalyst temperature and an operating mode of the combustion engine (16) are adjusted to λ ≤ 1, for the purpose of regeneration by means of an at least temporary influence over at least one operating parameter of the combustion engine (16), and wherein a catalyst status (34) is calculated and/or registered by at least one sensor,
**characterised in that,**
(a) a wash coat of the NOₓ catalyst (12) is subdivided into catalyst cells (32), according to a specifiable matrix (30),
(b) the catalyst status (34) is determined for each catalyst cell (32), and from this, a status parameter (36) is determined for each catalyst cell (32),
(c) a specifiable weighting factor (38) is allocated to each individual catalyst cell (32),
(d) a cell parameter (40) is calculated for each individual catalyst cell (32) for regeneration by means of the relevant status parameter (36) and a weighting factor (38) and
(e) a sum of the cell parameters (40) for each individual catalyst cell (32) is used to establish the regeneration parameters (44).

2. Method according to claim 1, **characterised in that** the status parameters (36) and/or the weighting factors (38) are re-calculated continuously during the regeneration or after the expiry of a period of time determined with reference to a specifiable function.

3. Method according to any one of the preceding claims, **characterised in that** the matrix (30) for subdividing the NOₓ storage catalyst (12) into catalyst cells (32) is determined on the basis of a storage-catalyst model for a spatial extension, a temperature characteristic, a characteristic for a regeneration rate, a characteristic for an NOₓ storage capacity, a characteristic for an NOₓ-, SOₓ- or O₂-loading status or a combination of the same.

4. Method according to any one of the preceding claims, **characterised in that** the catalyst status (34) includes the characteristic of the NOₓ-, SOₓ- or O₂-loading status or the temperature characteristic or a combination of the same.

5. Method according to any one of the preceding claims, **characterised in that** the weighting factor (38) is determined on the basis of a specifiable function for the NOₓ- and/or SOₓ-loading status of the individual catalyst cells (32).

6. Method according to any one of claims 1 to 4, **characterised in that** the weighting factor (38) is determined on the basis of a characteristic field for the NOₓ- and/or SOₓ-loading status and/or a spatial location of the individual catalyst cell (32).

## Revendications

1. Procédé de commande de régénération d'au moins un catalyseur accumulateur de NOₓ (12) disposé dans un conduit d'évacuation des gaz d'échappement (14) d'une machine à combustion interne (16), une température de catalyseur et un mode de fonctionnement de la machine à combustion interne (16) avec λ ≤ 1 étant réglés pour la régénération par le biais d'une intervention au moins temporaire sur au moins un paramètre de fonctionnement - le paramètre de régénération - de la machine à combustion interne (16), et un état du catalyseur (34) étant calculé et/ou détecté par au moins un capteur, **caractérisé en ce que**
(a) une couche d'imprégnation ou « wash coat » du catalyseur accumulateur NOₓ (12) est répartie selon une matrice spécifiable (30) dans des cellules de catalyseur (32),
(b) l'état du catalyseur (34), dont on déduit un paramètre d'état (36), est déterminé pour chaque cellule de catalyseur (32),
(c) un coefficient de pondération spécifiable (38) est affecté à chaque cellule individuelle de catalyseur (32),
(d) un paramètre de cellule (40) pour la régénération est calculé à l'aide du paramètre d'état (36) correspondant et du coefficient de pondération (38) pour chaque cellule de catalyseur individuelle (32), et
(e) une somme des paramètres de cellule (40) de chaque cellule individuelle de catalyseur (32) sert à déterminer le paramètre de régénération (44).

2. Procédé selon la revendication 1, **caractérisé en ce que** les paramètres d'état (36) et/ou les coefficients de pondération (38) sont recalculés en continu pendant la régénération ou après une durée déterminée par une fonction spécifiable.

3. Procédé selon l'une quelconque des revendications précédentes, **caractérisé en ce que** la matrice (30) est établie pour la répartition du catalyseur accumulateur de NOₓ (12) dans les cellules de catalyseur (32) au moyen d'un modèle de catalyseur accumulateur pour une distribution spatiale, une évolution de la température, une évolution de la vitesse de régénération, une évolution de la capacité d'accumulation de NOₓ, une évolution de l'état de charge en NOₓ, SOₓ ou O₂, ou une combinaison de ceux-ci.

4. Procédé selon l'une quelconque des revendications précédentes, **caractérisé en ce que** l'état du catalyseur (34) comprend une évolution de l'état de charge en NOₓ, SOₓ ou O₂, ou une évolution de la température, ou une combinaison des deux.

5. Procédé selon l'une quelconque des revendications précédentes, **caractérisé en ce que** le coefficient de pondération (38) est déterminé au moyen d'une fonction spécifiable pour l'état de charge en NOₓ et/ou SOₓ des différentes cellules de catalyseur (32).

6. Procédé selon l'une des revendications 1 à 4, **caractérisé en ce que** le coefficient de pondération (38) est déterminé au moyen d'un champ caractéristique pour l'état de charge en NOₓ et/ou SOₓ, et/ou d'une position dans l'espace des différentes cellules de catalyseur (32).
